Europäisches Patentamt

European Patent Office

Office européen des brevets

(11) Veröffentlichungsnummer: **0 334 280**
**A1**

## (12) EUROPÄISCHE PATENTANMELDUNG

(21) Anmeldenummer: 89105010.6

(51) Int. Cl.⁴: **C04B 37/02 , F16L 17/06**

(22) Anmeldetag: 21.03.89

(30) Priorität: 25.03.88 DE 3810190

(43) Veröffentlichungstag der Anmeldung:
27.09.89 Patentblatt 89/39

(84) Benannte Vertragsstaaten:
CH DE ES FR GB IT LI SE

(71) Anmelder: Hoechst CeramTec
Aktiengesellschaft
Wilhelmstrasse 14
D-8672 Selb(DE)

(72) Erfinder: Stuhler, Helmut
Tannenstrasse 1
D-8505 Röthenbach(DE)

(74) Vertreter: Reuter, Johann-Heinrich, Dr. et al
HOECHST AKTIENGESELLSCHAFT Zentrale
Patentabteilung Postfach 80 03 20
D-6230 Frankfurt/Main 80(DE)

(54) Verfahren zum dichten Verbinden von keramischen Dichtscheiben mit metallischen Vorrichtungen.

(57) Zur Abdichtung zwischen einer keramischen Dichtscheibe, die den Durchtritt eines Fluids regelt und metallischen an die Scheibe herangeführten Vorrichtungen wird eine roh gefertigte keramische Scheibe an den Stellen, die mit der metallischen Vorrichtung (z.B. einem Kupferrohr mit angeflanschtem Kragen) verbunden werden sollen, metallisiert und an den metallisierten Stellen mit der metallischen Vorrichtung verlötet. Man kann auch die metallische Vorrichtung mit der keramischen Dichtscheibe ohne vorhergehende Metallisierung verbinden, wenn man ein Aktivlot verwendet.

Nach dem Verlöten wird auf der der Metallvorrichtung abgewandten Seite der Scheibe die Gleit- und Dichtfläche durch Schleifen und/oder Läppen und/oder Polieren erzeugt.

Man kann auch umgekehrt zuerst auf der roh gefertigten Dichtscheibe die Gleit- und Dichtfläche durch Schleifen und/oder Läppen und/oder Polieren erzeugen und durch Aufbringen der Metallisierung und Verlöten, oder durch Aktivlöten, mit der metallischen Vorrichtung verbinden und dann mit höchstens 30 K/Min. abkühlen.

EP 0 334 280 A1

## Verfahren zum dichten Verbinden von keramischen Dichtscheiben mit metallischen Vorrichtungen

Keramische Dichtscheiben, beispielsweise solche aus hochprozentigem Aluminiumoxid (> 90 %) weisen ein breites Anwendungsspektrum auf. So besitzen sanitäre Einhandmischer solche Dichtscheiben, die sowohl die Durchflußmenge als auch die Temperatur regeln. Weitere Einsatzgebiete sind Heizungssysteme von Kraftfahrzeugen, Gasmischer oder Ölabsperrventile.

In allen Fällen müssen die Gehäuseteile und die Dichtteile so genau gearbeitet sein, daß die Dichtheit nach dem Zusammenfügen der Armatur gewährleistet ist. Insbesondere Schwierigkeiten bereitet heute immer noch die Abdichtung zwischen den keramischen Dichtscheiben und den an sie herangeführten metallischen Rohren, bzw. den die Dichtscheiben umgebenden metallischen Gehäusen.

In der DE-A 35 09 520 wird zur Rohrabdichtung einer Sanitärarmatur ein Kuststoffeinsatz an der Steuerkartusche befestigt, wobei der Kuststoffeinsatz gleichzeitig eine Gegenhalteplatte trägt, die wesentlich zur Abdichtung beiträgt.

In der EP-A 0 110 336 setzt man zur Rohrabdichtung lippenartig geformte Gummidichtungen ein, die durch die Montagekräfte die Dichtheit garantieren sollen. Die Zulaufrohre müssen über Gummidichtungen dicht an die keramischen Scheiben angepreßt werden. Dazu müssen die Rohre in irgendeiner Weise bei der Befestigung oder Verschließung der Kartusche eine Kraft in axialer Richtung erfahren, die den Anpreßdruck verursacht. Dies kann durch Verschrauben oder Verspannen mit dem Gehäuse erfolgen. Die Gummidichtungen sind bei dieser Version meistens O-förmig.

Vielfach weisen die Dichtscheiben von sanitären Einhandmischern neben den beiden Öffnungen für die Warm-und Kaltwasserzuleitungen noch eine weitere Öffnung zur Weiterleitung des gemischten Wassers auf, wobei an der Unterseite der Dichtscheibe eine kompliziert geformte Gummidichtung präzise eingepaßt sein muß, um ein unkontrolliertes Ablaufen des gemischten Wassers zu verhindern. Ein großes Problem ist die genaue Positionierung der Gummiteile beim Zusammenbau der Armatur. Wenn eine Gummidichtung leicht verrutscht, ist die Dichtheit der gesamten Apparatur gefährdet, weil der Anpreßdruck ungleichmäßig verteilt wird oder das Gummiteil dabei abgequetscht wird. Ein weiterer Nachteil bei der Verwendung von Gummidichtungen besteht darin, daß diese altern und deshalb von Zeit zu Zeit ausgewechselt werden müssen, will man nicht in Kauf nehmen, daß die Armatur undicht wird. Auf diese Weise geht ein Vorteil der keramischen Dichtscheiben wieder verloren, nämlich der, wartungsfrei zu sein. Nach dem Stand der Technik ist keine dichte, mechanisch feste, stoffschlüssige und dauerhafte Verbindung zwischen keramischen Dichtscheiben und den Zulaufrohren und/oder der metallenen Gehäusewand bekannt.

Die Aufgabe der Erfindung besteht darin, unter Vermeidung der schwierigen und unsicheren Abdichtung mit Gummiformteilen, keramische Dichtscheiben mechanisch fest, stoffschlüssig, dauerhaft und dicht mit den metallischen Zuführungsrohren und ggf. mit der metallischen Gehäusewand zu verbinden.

Dies wird erreicht durch ein Verfahren zum dichten Verbinden von keramischen Dichtscheiben mit metallischen Vorrichtungen, wobei die Dichtscheibe an den Stellen, die mit dem Metall verbunden werden sollen metallisiert wird und anschließend die metallische Vorrichtung mit der metallisierten Keramik verlötet wird, oder wobei die metallische Vorrichtung über ein Aktivlot direkt mit der keramischen Dichtscheibe verlötet wird, dadurch gekennzeichnet, daß

a) die roh gefertigte Dichtscheibe metallisiert und diese dann mit der metallischen Vorrichtung verlötet wird oder über ein Aktivlot direkt mit der metallischen Vorrichtung verlötet wird und anschließend die Gleit- und Dichtfläche der keramischen Dichtscheibe durch Schleifen und/oder Läppen und/oder Polieren erzeugt wird oder das

b) zuerst auf der roh gefertigten Dichtscheibe die Gleit- und Dichtfläche durch Schleifen und/oder Läppen und/oder Polieren erzeugt wird und nach dem Aufbringen der Metallisierung und nach dem Verlöten mit der metallischen Vorrichtung oder nach dem Aktivlöten mit jeweils höchstens 30 K/Min. abgekühlt wird.

Die Metallisierung von Keramik und ein anschließendes festes Verbinden dieser metallisierten Keramik mit einem Metall ist Stand der Technik und kann beispielsweise erfolgen, indem man zunächst beispielsweise eine Molybdän/Mangan-Metallisierungspaste auf die Keramik aufbringt und einbrennt. Die Metallisierungspasten bestehen gewöhlich aus $MnO_2$, $MgO$, $Al_2O_3$ und $SiO_2$ in wechselnden Zusammensetzungen und einem Metall wie Molybdän oder Wolfram. Solche Metallisierungspasten sind beispielsweise beschrieben in Berichte der deutschen keramischen Gesellschaft 42 (1965, Seiten 452-54). Auf die so eingebrannte Metallisierung wird dann chemisch oder galvanisch eine Kupfer- oder Nickelschicht aufgebracht. Diese Kupfer- oder Nickelschicht kann nun wiederum leicht mit einem Metall verlötet werden. Somit ist ein kontinuierlicher, stoffschlüssiger Übergang von Keramik zu Metall hergestellt, der mechanisch fest, dicht (meist auch gasdicht) und dauerhaft ist.

Eine andere Möglichkeit Keramik mit Metall zu verbinden besteht darin, ein Aktivlot zwischen Metall und Keramik zu plazieren und in einem einzigen Schritt das Metall über das Aktivlot mit der Keramik zu verlöten. Solche Aktivlote bestehen beispielsweise aus sauerstoffaffinen Elementen wie Titan, Kupfer oder Zirkonium, die beim Schmelzen einerseits Oxide bilden, die mit den oxidischen Bestandteilen der Keramik eine stoffschlüssige Verbindung eingehen und andererseits als Metall in der Flüssigphase mit dem anzulötenden Metall eine Legierung eingehen. Somit ist auch hier für einen mehr oder weniger kontinuierlichen Übergang von Metall zu Keramik gesorgt. Als Aktivlote sind weiterhin Glaslote bekannt, zum fixieren von Metalldurchführungen in Keramik. Das Glaslot wird als Pulver oder vorgeformter Körper an die zu verbindende Stelle gebracht und aufgeschmolzen. Solche Aktivlotverfahren sind beschrieben in Werkstoffe & Konstruktion, Vol. 1, No. 1, 1987 Seiten 16-21.

Es war nun völlig überraschend, daß die oben beschriebenen Metallisierungstechniken sich auch bei keramischen Dichtscheiben anwenden lassen, da der Fachmann annehmen mußte, daß die zum Verlöten notwendigen, relativ hohen Temperaturen zu Deformationen der Keramik führen, die diese für einen Einsatz als Dichtscheibe unbrauchbar machen. Schon geringste Abweichungen von der Planarität der Dichtebene der Dichtscheibe führen zur Leckbildung. Dieser Umstand ist sicherlich die Ursache dafür, daß die Metallisierung von keramischen Dichtscheiben bis heute nicht angewendet wird. Das erfindungsgemäße Verfahren bietet einen Ausweg aus dieser Sackgasse, so daß sämtliche Vorteile die die metallisierte Keramik mit sich bringt, nun auch auf keramische Dichtscheiben übertragen werden können.

Beispielsweise sanitäre Einhandmischbatterien gestalten sich nunmehr apparativ wesentlich einfacher, da die komplizierten und empfindlichen Gummi- bzw. Kunststoffdichtungen und deren Haltevorrichtungen entfallen können. Selbstverständlich sind auch Einsätze mit Medien wie Öle, schwache Säuren oder dergleichen nunmehr möglich, wenn bei der übrigen Auslegung der Abdichtung der Armatur die chemischen Eigenschaften der Medien berücksichtigt werden. Außerdem ist die Verbindung keramische Dichtscheibe/Metall gasdicht, so daß auch gasförmige Medien durchgesetzt werden können. Insbesondere beim Durchsatz von brennbaren Gasen bietet der Einsatz der solchermaßen abgedichteten Scheiben einen erheblichen Vorteil gegenüber dem Stand der Technik mit Gummiabdichtungen, da die Verbindung Metall/Keramik auch im Brandfall dicht bleibt.

Bei dem erfindungsgemäßen Verfahren geht man am besten so vor, daß man die rohe Dichtscheibe, d.h. die Dichtscheibe in dem Zustand, wie sie aus dem Brennofen kommt bzw. eine solche die nach dem Brand nur einseitig grob plangeschliffen wurde, an den Stellen, an denen sie mit Metallvorrichtungen fest verbunden werden soll, mit einer üblichen Metallisierungspaste - wie sie beispielsweise in loc. cit Ber. d. dtsch. Ker. Ges. beschrieben sind - bestreicht und diese einbrennt. Diese eingebrannte Metallisierungspaste wird anschließend chemisch oder galvanisch verkupfert oder vernickelt. Für das Anlöten der metallischen Vorrichtung an die Dichtscheibe nach der beschriebenen konventionellen Metallisierung können beispielsweise die folgenden zwei Lötverfahren angewendet werden. Das Weichlöten mit Loten auf Blei-Zinn-Basis bei Löttemperaturen von bis zu 450 °C, welches zu dichten, duktilen Verbindungen führt. Zum Löten werden entsprechende metallische Vorrichtungen mit einem Lotformling, der der Form der metallischen Vorrichtung angepaßt ist, in einer Lötlehre auf der Dichtscheibe exakt positioniert. Beim Erreichen der Schmelztemperatur des Lotes fließt dieses aus und benetzt sowohl die an der keramischen Dichtscheibe haftenden Schichten als auch das Metall. Nach der Abkühlung auf Raumtemperatur ist die Dichtscheibe mit der angelöteten metallischen Vorrichtung der Lötlehre entnehmbar und dauerhaft, stoffschlüssig verbunden. Insbesondere wenn höhere Festigkeiten gefordert werden, empfiehlt sich das Hartlöten. Dabei werden meist Silber-Kupfer-Lote verwendet, die Löttemperaturen von über 450 °C erfordern.

Man kann jedoch die Dichtscheibe auch direkt mit den metallischen Vorrichtungen über Aktivlote für Metall/Keramik-Verbunde (s. loc. cit Werkstoffe & Konstruktion) verbinden.

Unter metallischen Vorrichtungen werden in erster Linie die Zuleitungsrohre verstanden, die beispielsweise beim Einsatz von keramischen Dichtscheiben in sanitären Einhandmischern das warme und kalte Wasser zur Mischbatterie führen. Diese Rohre sind bevorzugt aus Kupfer. Um die Haftfestigkeit von Rohren an der keramischen Dichtscheibe noch weiter zu erhöhen, kann man die Auflagefläche Rohr/Dichtscheibe durch einen kragenförmigen Flansch an dem Rohr noch vergrößern. Weiterhin werden unter metallischen Vorrichtungen auch solche Teile verstanden, die kompliziert ausgeformt sind (beispielsweise in Tiefziehformen hergestellte Teile) und die gesamte Dichtscheibe umschließen. Diese Teile dichten dann beispielsweise die Scheibe nach unten hin wie ein Boden ab, so daß ein durchstromendes, gemischtes Medium in einen Auslaß gelangen kann. Die Metallteile können beispielsweise aus Kupfer, Eisennickel oder Eisennickelkobalt gefertigt sein.

Erfindungsgemäß wird erst jetzt die rohe Dichtscheibe, die an einer Seite mit einer oder mehreren metallischen Vorrichtungen stoffschlüssig verbunden ist, auf der den metallischen Vorrichtungen entgegenliegenden Seite geschliffen und/oder geläppt und/oder poliert, so daß die eigentliche Dichtfläche entsteht.

Es hat sich gezeigt, daß auch polierte Dichtscheiben metallisiert und verlötet bzw. über Aktivlote direkt verlötet werden können - ohne den oben beschriebenen Schaden zu nehmen - wenn man darauf achtet, daß die mit dem Metall verbundene Dichtscheibe nach dem Metallisierungsbrand und/oder nach dem Verlöten mit dem Metall nur langsam auf Raumtemperatur abkühlt, so daß sich die gesamte Abkühlkurve $(T = F(t))$ deutlich abflacht. Die Abkühlgeschwindigkeit wird dabei so gewählt, daß die entstehenden thermischen Spannungen nicht zur Zerstörung des Metall/Keramik-Verbundes führen und so, daß di hervorragende Planarität der fertigen Dichtscheiben erhalten bleibt. Als zweckmäßig haben sich Abkühlzeiten von höchstens 30 K/Min., bevorzugt 10-20 K/Min. erwiesen. Diese verlängerten Abkühlzeiten nach dem Metallisieren bzw. Verlöten werden beispielsweise dadurch erreicht, daß die Geschwindigkeit des Förderbandes, welches das Gut durch den Ofen transportiert, dem bekannten Temperaturprofil des Ofens so angepaßt wird, daß die oben angegebenen Abkühlzeiten eingehalten werden. Das gewünschte Ergebnis - eine insgesamt flachere Abkühlkurve - kann natürlich nur dann erreicht werden, wenn die Abkühlung über den gesamten Zeitraum möglichst konstant erfolgt. Dieses Verfahren ist dann besonders vorteilhaft wenn man die keramische Dichtscheibe auch umfangseitig mit einer metallischen Vorrichtung, beispielsweise mit dem Gehäuse einer Sanitärarmatur, verbinden will, da die einmal eingebaute Dichtscheibe nicht mehr oder nur sehr umständlich nachträglich poliert werden kann.

In den nachfolgenden Beispielen wird die Erfindung näher erläutert.

**Beispiel 1**

Anlöten von zwei Kupferrohren an eine fertig polierte Dichtscheibe (frittelos)

Es wurde eine zweilöchrige $Al_2O_3$-Dichtscheibe aus 96 %iger $Al_2O_3$-Keramik mit folgenden Abmessungen verwendet:

| | |
|---|---|
| Durchmesser: | 40 mm |
| Dicke: | 8 mm |
| Position der Löcher auf der Scheibe: | Mittelpunkt der Löcher in einem Winkelabstand von 45° |
| Abstand des Mittelpunktes der Löcher vom Mittelpunkt der Scheibe: | 10 mm |
| Zwei Langlöcher, gebogen: | 3 mm x 10 mm |

Abmessungen der anzubringenden Kupferrohre:

| | |
|---|---|
| Oval gebogen: | 5,5 mm x 12 mm |
| Länge: | 11,5 mm |
| Wandstärke: | 1 mm |
| Angeflanschter Kragen: | 2,5 mm |

Auf die Ränder der beiden Langlöcher wurde auf der nicht plangeschliffenen Seite der Dichtscheibe ein fritteloses (Metallisierungspräparat ohne Glasphase), handelsübliches Molybdän/Mangan-Präparat aufgetragen und dieses bei 1280 °C eingebrannt. Die Abkühlung erfolgte mit 14 K/Min. Die Mo/Mn-Metallisierung wurde dann galvanisch mit einer 3 μm dicken Nickelschicht verstärkt. Auf diese mit Nickel verstärkte Metallisierung wurde nun eine Ag/Cu-Lotscheibe exakt positioniert und Dichtscheibe und Lotring in eine Lötlehre eingefügt. Gleichzeitig erfolgte die Fixierung der beiden Cu-Rohre, die mit ihrem überstehenden Kragen genau auf den Lotring aufgesetzt wurden. Das Anlöten der Cu-Rohre erfolgte in reduzierender Atmosphäre bei 830 °C. Die Abkühlgeschwindigkeit betrug wiederum 14 K/Min.

4

**Beispiel 2**

Anlöten von zwei Kupferrohren an eine fertig polierte Dichtscheibe (frittehaltig)

Auf die Ränder der beiden Langlöcher (Dichtscheibe gemäß Beispiel 1) wurde auf der nicht plangeschliffenen Seiten der Dichtscheibe ein frittehaltiges (Metallisierungspräparat mit Glasphase), handelsübliches Metallisierungspräparat aufgetragen und bei 1100 °C eingebrannt (Abkühlgeschwindigkeit wie in Beispiel 1). Die Verstärkung der Metallisierung mit einer 3 μm dicken Nickelschicht und die Verlötung der Cu-Rohre (gemäß Beispiel 1) über eine Ag/Cu-Lotscheibe erfolgte wie in Beispiel 1 angegeben (auch mit gleicher Abkühlgeschwindigkeit).

**Beispiel 3**

Anlöten von zwei Kupferrohren an eine nur grob geschliffene Dichtscheibe (frittelos)

Mit der nur grob geschliffenen Dichtscheibe (Abmessungen wie in Beispiel 1) wurde genauso verfahren wie in Beispiel 1 beschrieben, mit dem Unterschied, daß die Abkühlgeschwindigkeiten nach dem Metallisierungsbrand und nach dem Anlöten der Cu-Rohre (Abmessungen wie in Beispiel 1) 30 K/Min. betrugen. Die abgekühlte Dichtscheibe mit angelöteten Cu-Rohren wurde dann erst geschliffen, poliert und geläppt, wobei die Gleitebene auf der dem Cu-Rohren entgegengesetzten Seite erzeugt wurde.

**Beispiel 4**

Anlöten von zwei Kupferrohren an eine nur grob geschliffene Dichtscheibe (frittehaltig)

Mit der nur grob geschliffenen Dichtscheibe (Abmessungen wie in Beispiel 1) wurde genauso verfahren wie in Beispiel 1 2 beschrieben, mit dem Unterschied, daß die Abkühlgeschwindigkeiten nach dem Metallisierungsbrand und nach dem Anlöten der Cu-Rohre (Abmessungen wie in Beispiel 1) 30 K/Min. betrugen. Wie in Beispiel 3 beschrieben erfolgte daraufhin die Erzeugung der Gleitebene.

Die Abrißfestigkeit der Metall/Keramik-Verbunde (Cu-Rohr/Dichtscheibe) lag in allen Fällen (Beispiele 1-4) über 130 N/mm². Die Gleitebenen aller nach den Beispielen 1-4 hergestellten Dichtscheiben mit angelöteten Cu-Rohren waren plan. Die Dichtscheiben wurden in Armaturen eingebaut und waren alle (Beispiele 1-4) bis zu einem Druck von 7 bar wasserdicht. Die Gasdichtheit der Metall/Keramik-Verbunde (Cu-Rohr/Dichtscheibe) wurde bis zu einem Unterdruck von $10^{-8}$ mbar • l/sec überprüft. Es traten keine Lecks auf.

**Vergleichsbeispiel**

Beispiel 1 wurde wiederholt, mit dem Unterschied daß die Abkühlgeschwindigkeit nach dem Metallisierungsbrand und nach dem Anlöten der Cu-Rohre auf 40 K/Min. erhöht wurde. Die Gleitebene war in diesem Fall nicht mehr plan, so daß die Armatur, in die diese Dichtscheibe eingebaut wurde, nicht mehr wasserdicht war.

**Ansprüche**

1. Verfahren zum dichten Verbinden von keramischen Dichtscheiben mit metallischen Vorrichtungen, wobei die Dichtscheibe an den Stellen, die mit dem Metall verbunden werden sollen, metallisiert wird und anschließend die metallische Vorrichtung mit der metallisierten Keramik verlötet wird, oder wobei die metallische Vorrichtung über ein Aktivlot direkt mit der keramischen Dichtscheibe verlötet wird, dadurch gekennzeichnet, daß

a) die rohgefertigte Dichtscheibe metallisiert und diese dann mit der metallischen Vorrichtung verlötet wird oder über ein Aktivlot direkt mit der metallischen Vorrichtung verlötet wird und anschließend die Gleit- und Dichtfläche der keramischen Dichtscheibe durch Schleifen und/oder Läppen und/oder Polieren erzeugt wird oder daß

b) zuerst auf der rohgefertigten Dichtscheibe die Gleit-und Dichtfläche durch Schleifen und/oder Läppen und/oder Polieren erzeugt wird und nach dem Aufbringen der Metallisierung und nach dem Verlöten mit der metallischen Vorrichtung oder nach dem Aktivlöten mit jeweils höchstens 30 K/Min. abgekühlt wird.

2. Verfahren nach Anspruch 1, dadurch gekennzeichnet, daß die metallische Vorrichtung durch Weichlöten mit der metallisierten keramischen Dichtscheibe verbunden wird.

3. Verfahren nach Anspruch 1, dadurch gekennzeichnet, daß die metallische Vorrichtung durch Hartlöten mit der metallisierten keramischen Dichtscheibe verbunden wird.

4. Verfahren nach einem oder mehreren der Ansprüche 1 bis 3, dadurch gekennzeichnet, daß man die keramische Dichtscheibe an ihrem Umfang mit einer metallischen Vorrichtung verlötet.

5. Verfahren nach einem oder mehreren der Ansprüche 1 bis 3, dadurch gekennzeichnet, daß die metallische Vorrichtung ein oder mehrere metallische Rohre oder kompliziert geformte Metallteile sind.

6. Verfahren nach Anspruch 5, dadurch gekennzeichnet, daß das Metall Kupfer, Eisennickel oder Eisennickelkobalt ist.

7. Verfahren nach Anspruch 5 und/oder 6, dadurch gekennzeichnet, daß die Rohre an der Seite, an der sie verlötet werden sollen, einen kragenförmigen Flansch aufweisen.

8. Verfahren nach einem oder mehreren der Ansprüche 1 bis 7, dadurch gekennzeichnet, daß die roh gefertigte Dichtscheibe eine solche ist, deren eine Seite, die später zur Gleit- und Dichtfläche wird, nur grob plangeschliffen ist.

| | EINSCHLÄGIGE DOKUMENTE | | EP 89105010.6 |
|---|---|---|---|

<table>
<tr><td>Kategorie</td><td>Kennzeichnung des Dokuments mit Angabe, soweit erforderlich, der maßgeblichen Teile</td><td>Betrifft Anspruch</td><td>KLASSIFIKATION DER ANMELDUNG (Int. Cl 4)</td></tr>
<tr><td>X</td><td>SPRECHSAAL FÜR KERAMIK GLAS EMAIL SILIKATE, 105. Jahrgang, Heft 20, 1972, Coburg<br><br>H.W.GRÜNLING "Keramik-Metall-Ver--bindungen für Einsatztemperaturen oberhalb 600°C"<br>Seiten 848-859<br><br>  * Seiten 848-853, Spalte 1, Absatz 1 *<br><br>--</td><td>1-6</td><td>C 04 B 37/02<br><br>F 16 L 17/06</td></tr>
<tr><td>X</td><td>DE - B - 1 270 474 (TELEFUNKEN PATENTVERWERTUNGSGESELLSCHAFT M.B.H.)<br><br>  * Spalte 1, Absatz 2 *<br><br>--</td><td>1,3</td><td></td></tr>
<tr><td>Y</td><td>DE - A1 - 3 607 796 (HEINZL WINFRIED) .<br><br>  * Ansprüche *<br><br>----</td><td>1</td><td>RECHERCHIERTE SACHGEBIETE (Int. Cl.4)<br><br>C 04 B<br><br>F 16 L</td></tr>
</table>

Der vorliegende Recherchenbericht wurde für alle Patentansprüche erstellt.

| Recherchenort | Abschlußdatum der Recherche | Prüfer |
|---|---|---|
| WIEN | 26-06-1989 | BECK |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument ·
L : aus andern Gründen angeführtes Dokument

& : Mitglied der gleichen Patentfamilie. übereinstimmendes Dokument

EPA Form 1503 03 82